# EUROPEAN PATENT APPLICATION

(11) **EP 4 386 051 A1**
(43) Date of publication of application: **19.06.2024**
(21) Application number: 22856225.2
(22) Date of filing: 10.08.2022
(51) Int. Cl.: C08L 75/16, C08G 18/66, C08G 18/48, C09J 175/16, C08G 18/61, C08G 18/32

(54) **(METH)ACRYLIC-MODIFIED POLYURETHANE COMPOSITION AND PREPARATION METHOD THEREFOR**

(30) Priority: 11.08.2021 KR 20210105850; 21.12.2021 KR 20210183781
(71) Applicant: Samyang Corporation, Jongno-gu Seoul 03129 (KR)
(72) Inventor: LEE, Jae Hoon, Daejeon 34049 (KR); RYU, Hoon, Daejeon 34127 (KR); IM, Jun Seop, Hwaseong-si Gyeonggi-do 18496 (KR)
(74) Representative: Schrell, Andreas
(86) International application number: PCT/KR2022/011938
(87) International publication number: WO 2023/018228

(57) **Abstract**

The present invention relates to a (meth)acrylic-modified polyurethane composition and a preparation method therefor, and, more specifically, to: a (meth)acrylic-modified polyurethane composition and a preparation method therefor, the composition comprising a hydrophilic (meth)acrylic-modified polyurethane, which comprises a polymerization unit derived from an anhydrosugar alcohol-alkylene oxide adduct, and a lipophilic (meth)acrylic-modified polyurethane, which comprises a polymerization unit derived from a lipophilic polyol, and enabling provision of an adhesive composition having excellent eco-friendliness, adhesive strength (particularly, adhesive strength between dissimilar materials) and oil resistance, and a hygroscopic coating composition having excellent hygroscopicity so as to be suitable for condensation prevention.

## Description

### TECHNICAL FIELD

The present invention relates to a (meth)acryl-modified polyurethane composition and method for preparing the same, and more specifically, the present invention relates to a (meth)acryl-modified polyurethane composition which comprises hydrophilic (meth)acryl-modified polyurethane comprising polymerized units derived from anhydrosugar alcohol-alkylene oxide adduct and lipophilic (meth)acryl-modified polyurethane comprising polymerized units derived from lipophilic polyol, and can provide a composition for adhesion having excellence in all of eco-friendliness, adhesion force (particularly, adhesion force between heterogeneous materials) and oil resistance, and a hygroscopic coating composition having excellent hygroscopicity so as to be suitable for anti-fogging use, and a method for preparing the same.

### BACKGROUND ART

Polyols and isocyanates, which are essential components for polyurethane, are usually prepared from petroleum-based raw materials. However, in the field of polyurethane, due to various reasons such as accelerated depletion of petroleum resources, demand to reduce greenhouse gas emissions according to climate change, rise of raw material prices, and increasing need for recyclable raw materials, a method for partially or completely replacing polyols and isocyanates prepared from petroleum-based raw materials with environmentally friendly components has been requested.

Polyols can be produced from recyclable biomass such as natural vegetable oils, cellulose, lignin, etc., and biopolyols derived from natural vegetable oils are already being produced on a commercial scale. The properties of biopolyol produced become different according to the type of biomass used for the production. In general, castor oil, palm oil, etc. are used for the production of soft and hard polyurethanes and synthetic polyols, and soybean oil is used for the production of polyols for soft polyurethane. However, the currently produced biomass-based biopolyol has a disadvantage in that it has a high viscosity.

Natural vegetable oil-based isocyanates are essentially aliphatic compounds, which have a disadvantage in that they are less reactive than aromatic diisocyanates which are based on petroleum. Therefore, research on preparing diisocyanate using biomass has not been conducted much.

Hydrogenated sugar (also referred to as "sugar alcohol") means a compound obtained by adding hydrogen to the reductive end group in sugar, and generally has a chemical formula of HOCH₂(CHOH)ₙCH₂OH wherein n is an integer of 2 to 5. According to the number of carbon atoms, hydrogenated sugar is classified into tetritol, pentitol, hexitol and heptitol (4, 5, 6 and 7 carbon atoms, respectively). Among them, hexitol having 6 carbon atoms includes sorbitol, mannitol, iditol, galactitol, etc. and in particular, sorbitol and mannitol are very useful materials.

Anhydrosugar alcohol is a material formed by removing one or more molecules of water from inside of hydrogenated sugar. It has a tetraol form with four hydroxyl groups in the molecule when one water molecule is removed or a diol form with two hydroxyl groups in the molecule when two water molecules are removed, and can be produced by using hexitol derived from starch (for example, Korean Patent No. 10-1079518 and Korean Laid-open Patent Publication No. 10-2012-0066904). Because anhydrosugar alcohol is an environmentally friendly material derived from recyclable natural resources, it has received much interest for a long time and researches on its production continue to proceed. Among such anhydrosugar alcohols, isosorbide produced from sorbitol has the widest industrial applicability at present.

Anhydrosugar alcohol can be used in various fields including treatment of heart and blood vessel diseases, patch adhesive, medicaments such as mouthwash, etc., solvents for compositions in the cosmetics industry, emulsifiers in the food industry, etc. In addition, it can increase the glass transition temperature of polymer materials like polyester, PET, polycarbonate, polyurethane, epoxy resin, etc., and improve the strength of such materials. Furthermore, because anhydrosugar alcohol is an environmentally friendly material derived from natural resources, it is very useful in the plastics industry such as bioplastics and the like. It is also known that anhydrosugar alcohol can be used as an adhesive, environmentally friendly plasticizer, biodegradable polymer, and environmentally friendly solvent for water-soluble lacquer.

As such, anhydrosugar alcohol is receiving much interest because of its wide applicability, and the level of practical industrial application thereof is increasing.

### PROBLEMS TO BE SOLVED

The purpose of the present invention is to provide a (meth)acryl-modified polyurethane composition which utilizes anhydrosugar alcohol derivative and thus can provide a composition for adhesion having excellence in all of eco-friendliness, adhesion force (particularly, adhesion force between heterogeneous materials) and oil resistance, and a hygroscopic coating composition having excellent hygroscopicity so as to be suitable for anti-fogging use, and a method for preparing the same.

### TECHNICAL MEANS

In order to achieve the above-stated purpose, the present invention provides a (meth)acryl-modified polyurethane composition comprising (1) hydrophilic (meth)acryl-modified polyurethane comprising polymerized units derived from anhydrosugar alcohol-alkylene oxide adduct; polymerized units derived from polyisocyanate; and polymerized units derived from hydroxyalkyl (meth)acrylate; and (2) lipophilic (meth)acryl-modified polyurethane comprising polymerized units derived from lipophilic polyol; polymerized units derived from polyisocyanate; and polymerized units derived from hydroxyalkyl (meth)acrylate.

In other aspect, the present invention provides a method for preparing a (meth)acryl-modified polyurethane composition, comprising the steps of: (1) reacting a polyol component comprising anhydrosugar alcohol-alkylene oxide adduct and lipophilic polyol with polyisocyanate to prepare intermediate having terminal isocyanate group; and (2) reacting the intermediate obtained in said step (1) with hydroxyalkyl (meth)acrylate.

In another aspect, the present invention provides a method for preparing a (meth)acryl-modified polyurethane composition, comprising the step of mixing (i) hydrophilic (meth)acryl-modified polyurethane comprising polymerized units derived from anhydrosugar alcohol-alkylene oxide adduct; polymerized units derived from polyisocyanate; and polymerized units derived from hydroxyalkyl (meth)acrylate, and (ii) lipophilic (meth)acryl-modified polyurethane comprising polymerized units derived from lipophilic polyol; polymerized units derived from polyisocyanate; and polymerized units derived from hydroxyalkyl (meth)acrylate.

In another aspect, the present invention provides a composition for adhesion comprising the (meth)acryl-modified polyurethane composition of the present invention.

In another aspect, the present invention provides an article to which the composition for adhesion of the present invention is applied.

In another aspect, the present invention provides a hygroscopic coating composition comprising the (meth)acryl-modified polyurethane composition of the present invention.

### EFFECT OF THE INVENTION

The (meth)acryl-modified polyurethane composition according to the present invention has excellent eco-friendliness, and when used in a composition for adhesion, it can improve all the adhesion force (particularly, adhesion force between heterogeneous materials) and oil resistance well, and when used in a hygroscopic coating composition, it can provide a coating with good adhesion to the glass substrate even after moisture absorption and good anti-fogging property.

### CONCRETE MODE FOR CARRYING OUT THE INVENTION

The present invention is explained in more detail below.

As used herein, the term "(meth)acryl" includes acryl, methacryl or combination thereof, and the term "(meth)acrylate" includes acrylate, methacrylate or combination thereof.

The (meth)acryl-modified polyurethane composition of the present invention comprises (1) hydrophilic (meth)acryl-modified polyurethane comprising polymerized units derived from anhydrosugar alcohol-alkylene oxide adduct; polymerized units derived from polyisocyanate; and polymerized units derived from hydroxyalkyl (meth)acrylate; and (2) lipophilic (meth)acryl-modified polyurethane comprising polymerized units derived from lipophilic polyol; polymerized units derived from polyisocyanate; and polymerized units derived from hydroxyalkyl (meth)acrylate.

In an embodiment, the (meth)acryl-modified polyurethane composition may comprise, based on total 100 parts by weight of the (meth)acryl-modified polyurethane composition, 16 to 84 parts by weight of the hydrophilic (meth)acryl-modified polyurethane and 16 to 84 parts by weight of the lipophilic (meth)acryl-modified polyurethane. If the amount of the hydrophilic (meth)acryl-modified polyurethane in the (meth)acryl-modified polyurethane composition is too less than the above level (that is, if the amount of the lipophilic (meth)acryl-modified polyurethane is too greater than the above level), the composition prepared therefrom may exhibit a low adhesion force to metal, and to the contrary, if the amount of the hydrophilic (meth)acryl-modified polyurethane is too greater than the above level (that is, if the amount of the lipophilic (meth)acryl-modified polyurethane is too less than the above level), the composition prepared therefrom may exhibit a low adhesion force to organic material.

More concretely, in total 100 parts by weight of the (meth)acryl-modified polyurethane composition, each of the hydrophilic (meth)acryl-modified polyurethane and lipophilic (meth)acryl-modified polyurethane may be comprised in an amount of 16 parts by weight or more, 17 parts by weight or more, 18 parts by weight or more, 19 parts by weight or more, or 20 parts by weight or more, and each of the hydrophilic (meth)acryl-modified polyurethane and lipophilic (meth)acryl-modified polyurethane also may be comprised in an amount of 84 parts by weight or less, 83 parts by weight or less, 82 parts by weight or less, 81 parts by weight or less, or 80 parts by weight or less, but it is not limited thereto.

### Anhydrosugar alcohol-alkylene oxide adduct

The anhydrosugar alcohol-alkylene oxide adduct (also referred to as "anhydrosugar alcohol-alkylene glycol") comprised as polymerized unit in the hydrophilic (meth)acryl-modified polyurethane is an adduct obtained by reacting hydroxyl group(s) at both ends or one end (preferably both ends) of anhydrosugar alcohol with alkylene oxide, and it means a compound in a form wherein hydrogen(s) of hydroxyl group(s) at both ends or one end (preferably both ends) of anhydrosugar alcohol is(are) substituted with hydroxyalkyl group(s) which is a ring-opened form of alkylene oxide.

In an embodiment, the alkylene oxide may be a linear alkylene oxide having 2 to 8 carbons or a branched alkylene oxide having 3 to 8 carbons, and more concretely, it may be ethylene oxide, propylene oxide or a combination thereof.

The anhydrosugar alcohol can be prepared by dehydration reaction of hydrogenated sugar derived from natural product. Hydrogenated sugar (also referred to as "sugar alcohol") means a compound obtained by adding hydrogen to the reductive end group in sugar, and generally has a chemical formula of HOCH₂(CHOH)ₙCH₂OH wherein n is an integer of 2 to 5. According to the number of carbon atoms, hydrogenated sugar is classified into tetritol, pentitol, hexitol and heptitol (4, 5, 6 and 7 carbon atoms, respectively). Among them, hexitol having 6 carbon atoms includes sorbitol, mannitol, iditol, galactitol, etc. and in particular, sorbitol and mannitol are very useful materials.

The anhydrosugar alcohol may be monoanhydrosugar alcohol, dianhydrosugar alcohol or a mixture thereof, and although it is not especially limited, dianhydrosugar alcohol can be used.

Monoanhydrosugar alcohol is an anhydrosugar alcohol formed by removing one molecule of water from inside of the hydrogenated sugar, and it has a tetraol form with four hydroxyl groups in the molecule. In the present invention, the kind of the monoanhydrosugar alcohol is not especially limited, and it may be preferably monoanhydrohexitol, and more concretely 1,4-anhydrohexitol, 3,6-anhydrohexitol, 2,5-anhydrohexitol, 1,5-anhydrohexitol, 2,6-anhydrohexitol or a mixture of two or more of the foregoing.

Dianhydrosugar alcohol is an anhydrosugar alcohol formed by removing two molecules of water from inside of the hydrogenated sugar, and it has a diol form with two hydroxyl groups in the molecule, and can be produced by using hexitol derived from starch. Because dianhydrosugar alcohol is an environmentally friendly material derived from recyclable natural resources, it has received much interest for a long time and researches on its production continue to proceed. Among such dianhydrosugar alcohols, isosorbide produced from sorbitol has the widest industrial applicability at present.

In the present invention, the kind of the dianhydrosugar alcohol is not especially limited, and it may be preferably dianhydrohexitol, and more concretely 1,4:3,6-dianhydrohexitol. 1,4:3,6-dianhydrohexitol may be isosorbide, isomannide, isoidide or a mixture of two or more of the foregoing.

In an embodiment, the anhydrosugar alcohol-alkylene oxide adduct may be a compound represented by the following formula 1, or a mixture of two or more of such compounds.

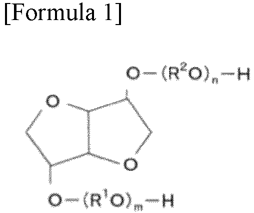

In the above formula 1,
each of R¹ and R² independently represents a linear alkylene group having 2 to 8 carbons or a branched alkylene group having 3 to 8 carbons,
each of m and n independently represents an integer of 0 to 15, and
m+n represents an integer of 1 to 30.

More preferably, in the above formula 1,
each of R¹ and R² independently represents ethylene group, propylene group or isopropylene group, and preferably R¹ and R² are the same, and
each of m and n independently represents an integer of 0 to 14,
provided that m+n is an integer of 1 or more, 2 or more, or 3 or more, and an integer of 25 or less, 20 or less, 15 or less, or 12 or less, and for example, it represents an integer of 1 to 25, preferably an integer of 2 to 20, and more preferably an integer of 3 to 15.

In an embodiment, the anhydrosugar alcohol-alkylene oxide adduct may be anhydrosugar alcohol-propylene oxide adduct represented by the following formula 1-1, anhydrosugar alcohol-ethylene oxide adduct represented by the following formula 1-2, or a mixture thereof.

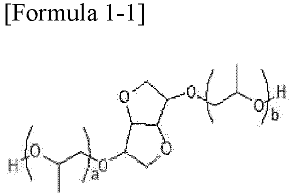

In the above formula 1-1,
each of a and b independently represents an integer of 0 to 15, and
a+b represents an integer of 1 to 30.

More preferably, in the above formula 1-1,
each of a and b independently represents an integer of 0 to 14,
provided that a+b is an integer of 1 or more, 2 or more, or 3 or more, and an integer of 25 or less, 20 or less, 15 or less, or 12 or less, and for example, it represents an integer of 1 to 25, preferably an integer of 2 to 20, and more preferably an integer of 3 to 15.

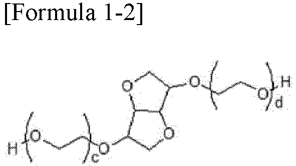

In the above formula 1-2,
each of c and d independently represents an integer of 0 to 15, and
c+d represents an integer of 1 to 30.

More preferably, in the above formula 1-2,
each of c and d independently represents an integer of 0 to 14,
provided that c+d is an integer of 1 or more, 2 or more, or 3 or more, and an integer of 25 or less, 20 or less, 15 or less, or 12 or less, and for example, it represents an integer of 1 to 25, preferably an integer of 2 to 20, and more preferably an integer of 3 to 15.

In an embodiment, the anhydrosugar alcohol-alkylene oxide adduct may be that prepared by a preparation method comprising the steps of: (1) treating anhydrosugar alcohol with acid component; and (2) conducting addition reaction of the acid-treated anhydrosugar alcohol obtained in said step (1) and alkylene oxide.

More concretely, the anhydrosugar alcohol-alkylene oxide adduct may be that prepared by a preparation method comprising the steps of: (1) treating anhydrosugar alcohol with acid component; (2) conducting addition reaction of the acid-treated anhydrosugar alcohol obtained in said step (1) and alkylene oxide; and (3) conducting addition reaction of the product obtained in said step (2) and alkylene oxide in the presence of base catalyst.

The acid component is not especially limited, and it may be selected from the group consisting of phosphoric acid, sulfuric acid, acetic acid, formic acid, heteropolyacid or a mixture thereof. In an embodiment, as the heteropolyacid, phosphotungstic acid, phosphomolybdic acid, silicotungstic acid or silicomolybdic acid, etc. may be used, and as other useful acid component, a commercially available acid component such as Amberlyst 15 (Dow Chemical), etc. can be used, too.

In an embodiment, the acid treatment can be conducted by using the acid component in an amount of 0.1 to 10 moles, preferably 0.1 to 8 moles, and more preferably 0.1 to 5 moles, based on 1 mole of anhydrosugar alcohol, under nitrogen atmosphere at an elevated temperature (for example, 80°C to 200°C, or 90°C to 180°C), and then conducting pressure reduction under vacuum to remove moisture in the reactor, but it is not limited thereto.

The acid component is used in the above acid treatment to facilitate the ring opening of alkylene oxide in the addition reaction of alkylene oxide explained below.

In general, the reaction of adding alkylene oxide to alcohol proceeds under a base catalyst, but in case of anhydrosugar alcohol, due to structural characteristics, the rate of adding the alkylene oxide competes with the rate of opening and decomposition of the ring structure of anhydrosugar alcohol by the base catalyst. Accordingly, not only the anhydrosugar alcohol but also the decomposition product of the anhydrosugar alcohol reacts with the alkylene oxide, and the reaction product between the decomposition product of the anhydrosugar alcohol decomposed by the base catalyst and the alkylene oxide may act as a factor to lower product quality and storage stability. To the contrary, if anhydrosugar alcohol is first treated with an acid component and then subjected to addition reaction of alkylene oxide, the acid component facilitates the ring opening of the alkylene oxide without generating decomposition products of the anhydrosugar alcohol by the base catalyst, and thus anhydrosugar alcohol-alkylene oxide adduct can be easily produced by addition reaction of anhydrosugar alcohol and alkylene oxide. Therefore, when the acid-treated anhydrosugar alcohol and alkylene oxide are subjected to addition reaction, the conventional problems can be solved.

In an embodiment, the addition reaction of the acid-treated anhydrosugar alcohol and alkylene oxide can be conducted by slowly feeding alkylene oxide to the acid-treated anhydrosugar alcohol at an elevated temperature (for example, 100°C to 180°C, or 120°C to 160°C) during a time of, for example, 1 hour to 8 hours, or 2 hours to 4 hours, but it is not limited thereto. The reaction molar ratio of alkylene oxide to 1 mole of anhydrosugar alcohol may be, for example, 1 mole or more, or 2 moles or more, and 30 moles or less, 20 moles or less, 15 moles or less, or 12 moles or less, and for example, it may be 1 mole to 30 moles, preferably 2 to 20 moles, but it is not limited thereto.

In an embodiment, the further addition reaction of the product obtained by addition reaction of alkylene oxide with additional alkylene oxide can be conducted, for example, in high pressure reactor capable of being pressurized (for example, pressurized to 3MPa or higher) in the presence of base catalyst (for example, alkali metal hydroxide such as sodium hydroxide, potassium hydroxide, etc. or alkaline earth metal hydroxide such as calcium hydroxide, etc.) at an elevated temperature (for example, 100°C to 180°C, or 120°C to 160°C) during a time of, for example, 1 hour to 8 hours, or 2 hours to 4 hours, but it is not limited thereto. The reaction molar ratio of the alkylene oxide to 1 mole of anhydrosugar alcohol may be, for example, 1 mole or more, 2 moles or more, or 3 moles or more, and 30 moles or less, 20 moles or less, 15 moles or less, or 12 moles or less, and for example, it may be 1 mole to 30 moles, preferably 2 to 20 moles, more preferably 3 to 15 moles, but it is not limited thereto. Prior to feeding of the base catalyst, the acid component used in the treatment can be filtered and removed.

The product obtained by the addition reaction of the acid-treated anhydrosugar alcohol and alkylene oxide (i.e., a compound in a form where alkylene oxide is added to anhydrosugar alcohol) has a very stable structure, and thus even in the presence of base catalyst, the ring structure of the anhydrosugar alcohol is neither easily opened nor decomposed at high temperature. Therefore, it is very advantageous for further addition reaction of alkylene oxide. If it is continued to use the acid catalyst even during the further additional reaction of alkylene oxide, the acid catalyst helps to promote ring opening of alkylene oxide, but the reaction rate decreases as the number of moles of added alkylene oxide increases. That is, the rate of adding alkylene oxide and the rate of ring opening of the alkylene oxide itself compete, and at this time, the rate of adding alkylene oxide becomes slow, and the self-condensation reaction between the ring-opened alkylene oxides and the generation of byproduct proceed, which may cause deterioration of quality. Therefore, the further addition reaction of alkylene oxide is conducted under base catalyst.

Thereafter, the step of removing metal ions released from the used base catalyst may be conducted additionally, and for this, a metal ion adsorbent such as, for example, Ambosol MP20 (magnesium silicate component) may be used.

### Lipophilic polyol

The lipophilic polyol comprised as polymerized unit in the lipophilic (meth)acryl-modified polyurethane is a polyol having low-surface energy characteristics, and concretely it may be selected from polytetrahydrofuran, polypropyleneglycol, polydimethylsiloxane (PDMS) polyol, or combination thereof, but it is not limited thereto.

In an embodiment, although it is not especially limited, the number average molecular weight (Mn) of the lipophilic polyol may be concretely 200 to 3,000 g/mol, more concretely 500 to 2,500 g/mol, still more concretely 700 to 2,300 g/mol, and still more concretely 1,000 to 2,000 g/mol. If the number average molecular weight of the lipophilic polyol is too lower than the above level, the bonded sample of heterogeneous materials, to which the composition for adhesion comprising a (meth)acryl-modified polyurethane composition prepared therefrom is applied, may have low shear strength and thus the adhesion may become poor, and to the contrary, if the number average molecular weight of the lipophilic polyol is too higher than the above level, the bonded sample of heterogeneous materials, to which the composition for adhesion comprising a (meth)acryl-modified polyurethane composition prepared therefrom is applied, may have low oil resistance.

### Polyisocyanate

The polyisocyanate comprised as polymerized unit in the hydrophilic and lipophilic (meth)acryl-modified polyurethanes may be, for example, aromatic polyisocyanate such as methylenediphenyl diisocyanate (MDI) (for example, 2,4- or 4,4'-methylenediphenyl diisocyanate), xylylene diisocyanate (XDI), m- or p-tetramethylxylylene diisocyanate (TMXDI) , toluene diisocyanate (TDI), di- or tetra-alkyldiphenylmethane diisocyanate, 3,3'-dimethyldiphenyl-4,4'-diisocyanate (TODI), phenylene diisocyanate (for example, 1,3-phenylene diisocyanate, 1,4-phenylene diisocyanate), naphthalene diisocyanate (NDI), or 4,4'-dibenzyl diisocyanate, etc.; aliphatic polyisocyanate such as hydrogenated MDI (H12MDI), 1-methyl-2,4-diisocyanatocyclohexane, 1,12-diisocyanatododecane, 1,6-diisocyanato-2,2,4-trimethylhexane, 1,6-diisocyanato-2,4,4-trimethylhexane, isophorone diisocyanate (IPDI), tetramethoxybutane-1,4-diisocyanate, butane-1,4-diisocyanate, hexamethylene diisocyanate (HDI) (for example, 1,6-hexamethylene diisocyanate), dimer fatty acid diisocyanate, dicyclohexylmethane diisocyanate, cyclohexane diisocyanate (for example, cyclohexane-1,4-diisocyanate) or ethylene diisocyanate, etc.; or a combination thereof, but it is not limited thereto.

In other embodiment, the polyisocyanate may be methylenediphenyl diisocyanate (MDI), ethylene diisocyanate, 1,4-tetramethylene diisocyanate, 1,6-hexamethylene diisocyanate, 1,12-dodecane diisocyanate, cyclobutane-1,3-diisocyanate, cyclohexane-1,3-diisocyanate, cyclohexane-1,4-diisocyanate, isophorone diisocyanate, 2,4-hexahydrotoluene diisocyanate, 2,6-hexahydrotoluene diisocyanate, dicyclohexylmethane- 4,4'-diisocyanate (HMDI), 1,3-phenylene diisocyanate, 1,4-phenylene diisocyanate, 2,4-toluene diisocyanate, 2,6-toluene diisocyanate, mixed toluene diisocyanate of 2,4-toluene diisocyanate and 2,6-toluene diisocyanate (2,4-/2,6-isomer ratio=80/20), diphenylmethane-2,4'-diisocyanate, diphenylmethane-4,4'-diisocyanate, polydiphenylmethane diisocyanate (PMDI), naphthalene-1,5-diisocyanate, or a combination thereof, but it is not limited thereto.

More concretely, the polyisocyanate may be methylenediphenyl diisocyanate (MDI), toluene diisocyanate (TDI), hexamethylene diisocyanate (HDI), isophorone diisocyanate (IPDI), or a combination thereof.

### Hydroxyalkyl (meth)acrylate

The hydroxyalkyl (meth)acrylate comprised as polymerized unit in the hydrophilic and lipophilic (meth)acryl-modified polyurethanes may be, for example, a linear or branched alkyl acrylate having hydroxyl group, a linear or branched alkyl methacrylate having hydroxyl group, or a combination thereof, and more concretely, it may be a hydroxy-C₁₋₈ alkyl (meth)acrylate-i.e., a linear C₁₋₈ alkyl acrylate having hydroxyl group, a branched C₃₋₈ alkyl acrylate having hydroxyl group, a linear C₁₋₈ alkyl methacrylate having hydroxyl group, a branched C₃₋₈ alkyl methacrylate having hydroxyl group, or a combination thereof, and still more concretely, it may be hydroxymethyl acrylate, hydroxymethyl methacrylate, hydroxyethyl acrylate, hydroxyethyl methacrylate, hydroxypropyl acrylate, hydroxypropyl methacrylate, hydroxybutyl acrylate, hydroxybutyl methacrylate, hydroxypentyl acrylate, hydroxypentyl methacrylate, 2-hydroxyethylhexyl acrylate, 2-hydroxyethylhexyl methacrylate, 2-hydroxyethylbutyl acrylate, 2-hydroxyethylbutyl metacrylate, hydroxyoctyl acrylate, hydroxyoctyl methacrylate, or a combination thereof, but it is not limited thereto.

Still more concretely, the hydroxyalkyl (meth)acrylate may be 2-hydroxyethyl acrylate, 2-hydroxyethyl methacrylate, hydroxypropyl acrylate, hydroxypropyl methacrylate, hydroxybutyl acrylate, hydroxybutyl methacrylate, or a combination thereof.

### Hydrophilic (meth)acryl-modified polyurethane

In an embodiment, the hydrophilic (meth)acryl-modified polyurethane may be represented by the following formula 2:

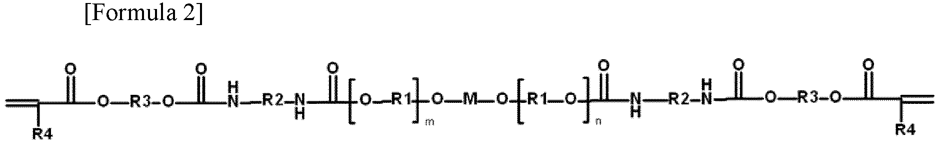

In the above formula 2,
each of R1 is independently an alkylene group, concretely it is a C2-C8 linear or C3-C8 branched alkylene group, and more concretely it is a C2-C6 linear or C3-C6 branched alkylene group,
each of R2 is independently an alkylene group, a cycloalkylene group, or an arylene group, and concretely it is a C2-C20 linear or C3-C20 branched alkylene group, a C3-C20 cycloalkylene group, or a C6-C20 arylene group,
each of R3 is independently an alkylene group, concretely it is a C1-C8 linear or C3-C8 branched alkylene group, and more concretely it is a C2-C6 linear or C3-C6 branched alkylene group,
each of R4 is independently a hydrogen atom or an alkyl group, and concretely it is a hydrogen atom or a C1-C4 linear or C3-C4 branched alkyl group,
M is a divalent organic group derived from anhydrosugar alcohol, concretely it is a divalent organic group derived from isosorbide, isomannide or isoidide, and more concretely it is selected from the following formulas: 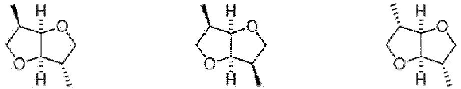
each of m and n independently represents an integer of 0 to 15,
m+n represents an integer of 1 to 30, more concretely an integer of 1 to 25, still more concretely an integer of 1 to 20, still more concretely an integer of 3 to 15, and still more concretely an integer of 5 to 15.

More concretely, the hydrophilic (meth)acryl-modified polyurethane may be represented by any one of the following formulas, but it is not limited thereto:

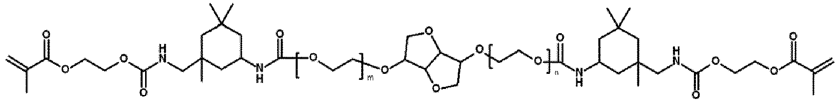

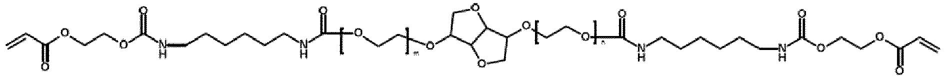

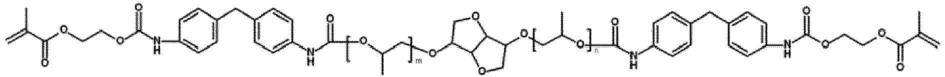

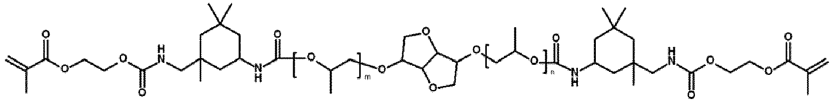

In the above formulas, each of m, n and m+n is independently the same as defined in the above formula 2.

The hydrophilic (meth)acryl-modified polyurethane can be obtained by reacting polyisocyanate to the anhydrosugar alcohol-alkylene oxide adduct and then reacting hydroxyalkyl (meth)acrylate thereto.

In an embodiment, the hydrophilic (meth)acryl-modified polyurethane can be prepared by a method comprising the steps of: (a) reacting anhydrosugar alcohol-alkylene oxide adduct and polyisocyanate to prepare intermediate having terminal isocyanate group; and (b) reacting the intermediate obtained in said step (a) and hydroxyalkyl (meth)acrylate.

According to an embodiment, the hydrophilic (meth)acryl-modified polyurethane can be prepared by reacting 2 equivalents of diisocyanate to 1 equivalent of anhydrosugar alcohol (e.g., isosorbide (ISB))-alkylene oxide adduct to prepare intermediate having terminal isocyanate group, and then reacting the terminal isocyanate group of the intermediate with 2 equivalents of hydroxyalkyl (meth)acrylate (e.g., 2-hydroxyethyl methacrylate).

According to an embodiment, the reaction of the anhydrosugar alcohol-alkylene oxide adduct and polyisocyanate may be conducted optionally in the presence of catalyst (for example, tin-based catalyst such as dibutyltin dilaurate (DBTDL)) at room temperature or an elevated temperature (for example, at 50 to 100°C, preferably at 50 to 70°C) during a proper time (for example, 0.1 to 5 hours, preferably 0.5 to 2 hours).

According to an embodiment, the reaction of the product of reacting anhydrosugar alcohol-alkylene oxide adduct and polyisocyanate (i.e., the intermediate obtained in the above step (a)) and hydroxyalkyl (meth)acrylate may be conducted optionally in the presence of catalyst (for example, tin-based catalyst such as dibutyltin dilaurate (DBTDL)) at an elevated temperature (for example, at 50 to 100°C, preferably at 50 to 70°C) during a proper time (for example, 0.1 to 5 hours, preferably 0.5 to 2 hours).

### Lipophilic (meth)acryl-modified polyurethane

In an embodiment, the lipophilic (meth)acryl-modified polyurethane may be represented by the following formula 3:

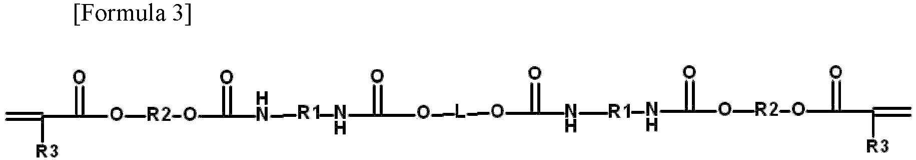

In the above formula 3,
each of R1 is independently an alkylene group, a cycloalkylene group, or an arylene group,
each of R2 is independently an alkylene group,
each of R3 is independently a hydrogen atom or an alkyl group,
L is a divalent organic group derived from lipophilic polyol,
wherein the number average molecular weight of the lipophilic polyol is 200 to 3,000 g/mol.

More concretely, in the above formula 3,
each of R1 is independently a C2-C20 linear or C3-C20 branched alkylene group, a C3-C20 cycloalkylene group, or a C6-C20 arylene group,
each of R2 is independently a C1-C8 linear or C3-C8 branched alkylene group,
each of R3 is independently a hydrogen atom or a C1-C4 linear or C3-C4 branched alkyl group,
L is a divalent organic group derived from lipophilic polyol selected from polytetrahydrofuran, polypropyleneglycol, polydimethylsiloxane (PDMS) polyol, or combination thereof,
wherein the number average molecular weight of the lipophilic polyol is 500 to 2,500 g/mol.

The lipophilic (meth)acryl-modified polyurethane can be obtained by reacting polyisocyanate to the lipophilic polyol and then reacting hydroxyalkyl (meth)acrylate thereto.

More concretely, the lipophilic (meth)acryl-modified polyurethane can be prepared by a method comprising the steps of: (c) reacting lipophilic polyol and polyisocyanate to prepare intermediate having terminal isocyanate group; and (d) reacting the intermediate obtained in said step (c) and hydroxyalkyl (meth)acrylate.

According to an embodiment, the lipophilic (meth)acryl-modified polyurethane can be prepared by reacting 2 equivalents of diisocyanate to 1 equivalent of lipophilic polyol (e.g., polytetrahydrofuran, polypropyleneglycol, or polydimethylsiloxane diol having a number average molecular weight of 200 to 3,000 g/mol) to prepare intermediate having terminal isocyanate group, and then reacting the terminal isocyanate group of the intermediate with 2 equivalents of hydroxyalkyl (meth)acrylate (e.g., 2-hydroxyethyl methacrylate).

According to an embodiment, the reaction of the lipophilic polyol and polyisocyanate may be conducted optionally in the presence of catalyst (for example, tin-based catalyst such as dibutyltin dilaurate (DBTDL)) at room temperature or an elevated temperature (for example, at 50 to 100°C, preferably at 50 to 70°C) during a proper time (for example, 0.1 to 5 hours, preferably 0.5 to 2 hours).

According to an embodiment, the reaction of the product of reacting lipophilic polyol and polyisocyanate (i.e., the intermediate obtained in the above step (c)) and hydroxyalkyl (meth)acrylate may be conducted optionally in the presence of catalyst (for example, tin-based catalyst such as dibutyltin dilaurate (DBTDL)) at an elevated temperature (for example, at 50 to 100°C, preferably at 50 to 70°C) during a proper time (for example, 0.1 to 5 hours, preferably 0.5 to 2 hours).

### Method for preparing the (meth)acryl-modified polyurethane composition

According to other aspect, the present invention provides a method (the first method) for preparing a (meth)acryl-modified polyurethane composition, comprising the steps of: (1) reacting a polyol component comprising anhydrosugar alcohol-alkylene oxide adduct and lipophilic polyol with polyisocyanate to prepare intermediate having terminal isocyanate group; and (2) reacting the intermediate obtained in said step (1) with hydroxyalkyl (meth)acrylate.

According to another aspect, the present invention provides a method (the second method) for preparing a (meth)acryl-modified polyurethane composition, comprising the step of mixing (i) hydrophilic (meth)acryl-modified polyurethane comprising polymerized units derived from anhydrosugar alcohol-alkylene oxide adduct; polymerized units derived from polyisocyanate; and polymerized units derived from hydroxyalkyl (meth)acrylate, and (ii) lipophilic (meth)acryl-modified polyurethane comprising polymerized units derived from lipophilic polyol; polymerized units derived from polyisocyanate; and polymerized units derived from hydroxyalkyl (meth)acrylate.

In the first and second methods for preparing the (meth)acryl-modified polyurethane composition, the anhydrosugar alcohol-alkylene oxide adduct, lipophilic polyol, polyisocyanate and hydroxyalkyl (meth)acrylate are the same as explained above.

According to an embodiment, in the first method for preparing the (meth)acryl-modified polyurethane composition, the polyol component may comprise, based on total 100 parts by weight of the polyol component, 16 to 84 parts by weight of anhydrosugar alcohol-alkylene oxide adduct and 16 to 84 parts by weight of lipophilic polyol, and more concretely, in total 100 parts by weight of the polyol component, each of the anhydrosugar alcohol-alkylene oxide adduct and lipophilic polyol may be comprised in an amount of 16 parts by weight or more, 17 parts by weight or more, 18 parts by weight or more, 19 parts by weight or more, or 20 parts by weight or more, and each of the anhydrosugar alcohol-alkylene oxide adduct and lipophilic polyol also may be comprised in an amount of 84 parts by weight or less, 83 parts by weight or less, 82 parts by weight or less, 81 parts by weight or less, or 80 parts by weight or less, but it is not limited thereto.

According to an embodiment, in the first method for preparing the (meth)acryl-modified polyurethane composition, the reaction in said step (1) of the polyol component and polyisocyanate may be conducted optionally in the presence of catalyst (for example, tin-based catalyst such as dibutyltin dilaurate (DBTDL)) at room temperature or an elevated temperature (for example, at 50 to 100°C, preferably at 50 to 70°C) during a proper time (for example, 0.1 to 5 hours, preferably 0.5 to 2 hours), and the reaction in said step (2) of the product of reacting polyol component and polyisocyanate (i.e., the intermediate obtained from said step (1)) and hydroxyalkyl (meth)acrylate may be conducted optionally in the presence of catalyst (for example, tin-based catalyst such as dibutyltin dilaurate (DBTDL)) at an elevated temperature (for example, at 50 to 100°C, preferably at 50 to 70°C) during a proper time (for example, 0.1 to 5 hours, preferably 0.5 to 2 hours).

According to an embodiment, in the second method for preparing the (meth)acryl-modified polyurethane composition, based on total 100 parts by weight of the prepared (meth)acryl-modified polyurethane composition, (i) 16 to 84 parts by weight of the hydrophilic (meth)acryl-modified polyurethane and (ii) 16 to 84 parts by weight of the lipophilic (meth)acryl-modified polyurethane may be mixed, and more concretely, each of (i) hydrophilic (meth)acryl-modified polyurethane and (ii) lipophilic (meth)acryl-modified polyurethane may be mixed in an amount of 16 parts by weight or more, 17 parts by weight or more, 18 parts by weight or more, 19 parts by weight or more, or 20 parts by weight or more, and each of the hydrophilic and lipophilic (meth)acryl-modified polyurethanes also may be mixed in an amount of 84 parts by weight or less, 83 parts by weight or less, 82 parts by weight or less, 81 parts by weight or less, or 80 parts by weight or less, but it is not limited thereto.

In the second method for preparing the (meth)acryl-modified polyurethane composition, methods for preparing each of (i) hydrophilic (meth)acryl-modified polyurethane and (ii) lipophilic (meth)acryl-modified polyurethane to be mixed are the same as explained above.

The (meth)acryl-modified polyurethane composition according to the present invention has excellent eco-friendliness, and when used in a composition for adhesion, it can improve all the adhesion force (particularly, adhesion force between heterogeneous materials) and oil resistance well.

Therefore, according to another aspect, the present invention provides a composition for adhesion comprising the (meth)acryl-modified polyurethane composition of the present invention, and an article to which the composition for adhesion is applied.

In an embodiment, the composition for adhesion may be used for adhesion between heterogeneous materials, for example, between a metallic material and a material other than metal (for example, organic material such as plastic material), and the article may be an article comprising such heterogeneous materials bonded with each other by the composition for adhesion.

In an embodiment, the composition for adhesion may further comprise (meth)acrylic monomer and/or epoxy resin.

In an embodiment, the composition for adhesion may further comprise one or more additive components that can be comprised in a conventional adhesive composition, for example, curing promotor, thermal polymerization initiator and/or polymerization inhibitor.

According to another aspect, the present invention provides a hygroscopic coating composition comprising the (meth)acryl-modified polyurethane composition of the present invention.

In an embodiment, the hygroscopic coating composition may be used particularly suitable for anti-fogging use.

In an embodiment, the hygroscopic coating composition may further comprise (meth)acrylic monomer.

In an embodiment, the hygroscopic coating composition may further comprise additive that can be conventionally used in a hygroscopic coating composition, for example, polymerization initiator (for example, thermal polymerization initiator, photopolymerization initiator, etc.) and/or polymerization inhibitor.

The present invention is explained in more detail through the following Examples and Comparative Examples. However, the scope of the present invention is not limited thereby in any manner.

### EXAMPLES

### <Preparation of anhydrosugar alcohol-alkylene oxide adduct>

### Preparation Example A1: Preparation of isosorbide-ethylene oxide 5 mole adduct

146g of isosorbide and 0.15g of phosphoric acid (85%) as an acid component were put into a reactor that could be pressurized, and the inside of the reactor was substituted with nitrogen and heated up to 100°C and the moisture in the reactor was removed by pressure reduction under vacuum. Then, while firstly adding 88g of ethylene oxide slowly thereto, the reaction was conducted at 100 to 140°C for 2 to 3 hours. At that time, the reaction temperature was controlled so as not to exceed 140°C. Thereafter, the inside of the reactor was cooled to 50°C, and then 0.3g of potassium hydroxide was added to the reactor, the inside of the reactor was substituted with nitrogen and heated up to 100°C and the moisture in the reactor was removed by pressure reduction under vacuum. Then, while secondly adding 132g of ethylene oxide slowly thereto, the reaction was conducted at 100 to 140°C for 2 to 3 hours. After completing the reaction, the inside of the reactor was cooled to 50°C, 4.0g of Ambosol MP20 as adsorbent was added thereto, and the inside of the reactor was reheated and agitated at 100°C to 120°C for 1 to 5 hours to remove residual metal ions (at that time, the inside of the reactor was substituted with nitrogen and/or pressure reduction under vacuum was carried out). After confirming that no metal ions were detected, the inside of the reactor was cooled to 60°C to 90°C and the remaining byproduct was removed to obtain 362g of isosorbide-ethylene oxide 5 mole adduct in transparent liquid form.

### Preparation Example A2: Preparation of isosorbide-ethylene oxide 10 mole adduct

Excepting that the secondly added amount of ethylene oxide was changed from 132g to 352g, the same method as Preparation Example A1 was conducted to obtain 551g of isosorbide-ethylene oxide 10 mole adduct in transparent liquid form.

### Preparation Example A3: Preparation of isosorbide-propylene oxide 5 mole adduct

As the raw material for the addition reaction, propylene oxide was used instead of ethylene oxide. Concretely, excepting that 116g of propylene oxide was firstly added instead of 88g of ethylene oxide and 174g of propylene oxide was secondly added instead of 132g of ethylene oxide, the same method as Preparation Example A1 was conducted to obtain 423g of isosorbide-propylene oxide 5 mole adduct in transparent liquid form.

### Preparation Example A4: Preparation of isosorbide-propylene oxide 10 mole adduct

As the raw material for the addition reaction, propylene oxide was used instead of ethylene oxide. Concretely, excepting that 116g of propylene oxide was firstly added instead of 88g of ethylene oxide and 465g of propylene oxide was secondly added instead of 132g of ethylene oxide, the same method as Preparation Example A1 was conducted to obtain 698g of isosorbide-propylene oxide 10 mole adduct in transparent liquid form.

### <Preparation of (meth)acryl-modified polyurethane composition>

### Example A1: Preparation of (meth)acryl-modified polyurethane composition by using polypropyleneglycol (80 parts by weight based on 100 parts by weight of total polyol) and isosorbide-ethylene oxide 5 mole adduct (20 parts by weight based on 100 parts by weight of total polyol) as polyol, isophorone diisocyanate (IPDI) as polyisocyanate and 2-hydroxyethyl methacrylate as hydroxyalkyl (meth)acrylate

Into a 3-necked glass reactor equipped with an agitator, 600g of isophorone diisocyanate (IPDI) and 0.6g of dibutyltin dilaurate (DBTDL) as reaction catalyst were fed. While agitating the mixture at room temperature, as polyol component, 800g of polypropyleneglycol (number average molecular weight: 1,000 g/mol, Kumho Petrochemical Co., Ltd.) and 200g of the isosorbide-ethylene oxide 5 mole adduct prepared in Preparation Example A1 was added slowly thereto and the crosslinking reaction was conducted. After completing addition of the polyol component, the mixture was agitated at 50°C for 1 hour for aging, and 350g of 2-hydroxyethyl methacrylate was added slowly thereto and the acryl modification reaction was conducted. After completing addition of 2-hydroxyethyl methacrylate, the mixture was agitated at 50°C for 1 hour for aging, and the reaction product was cooled to room temperature to obtain 1,950g of a (meth)acryl-modified polyurethane composition comprising 390g of (meth)acryl-modified polyurethane of the following formula A-1 and 1,560g of (meth)acryl-modified polyurethane of the following formula A-2.

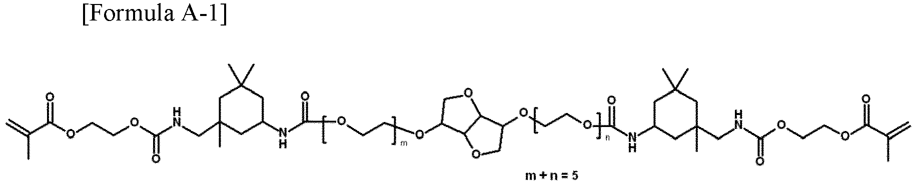

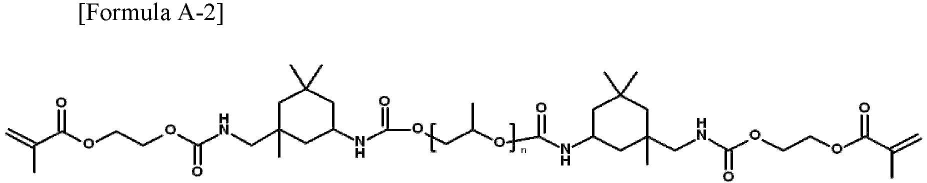

### Example A2: Preparation of (meth)acryl-modified polyurethane composition by using polytetrahydrofuran (50 parts by weight based on 100 parts by weight of total polyol) and isosorbide-ethylene oxide 10 mole adduct (50 parts by weight based on 100 parts by weight of total polyol) as polyol, hexamethylene diisocyanate (HDI) as polyisocyanate and 2-hydroxyethyl acrylate as hydroxyalkyl (meth)acrylate

Excepting that 270g of hexamethylene diisocyanate (HDI) was used instead of isophorone diisocyanate (IPDI) as polyisocyanate, 365g of polytetrahydrofuran (number average molecular weight: 2,000 g/mol, Aldrich Co., Ltd.) and 365g of the isosorbide-ethylene oxide 10 mole adduct prepared in Preparation Example A2 were used instead of polypropyleneglycol (number average molecular weight: 1,000 g/mol, Kumho Petrochemical Co., Ltd.) and the isosorbide-ethylene oxide 5 mole adduct prepared in Preparation Example A1 as polyol component and 186g of 2-hydroxyethyl acrylate was used instead of 2-hydroxyethyl methacrylate as hydroxyalkyl (meth)acrylate, the same method as Example A1 was conducted to obtain 1,185g of a (meth)acryl-modified polyurethane composition comprising 593g of (meth)acryl-modified polyurethane of the following formula B-1 and 592g of (meth)acryl-modified polyurethane of the following formula B-2.

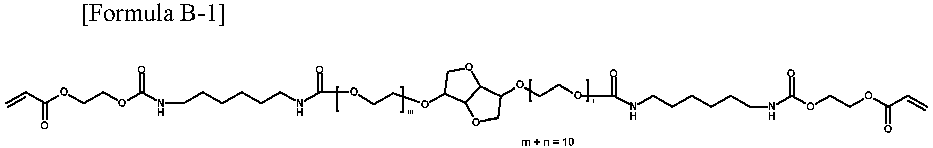

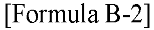

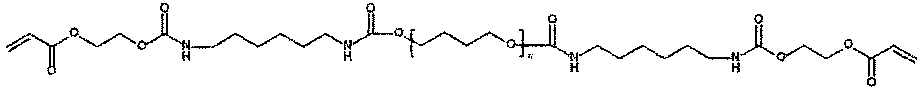

### Example A3: Preparation of (meth)acryl-modified polyurethane composition by using polydimethylsiloxane diol (20 parts by weight based on 100 parts by weight of total polyol) and isosorbide-propylene oxide 5 mole adduct (80 parts by weight based on 100 parts by weight of total polyol) as polyol, methylenediphenyl diisocyanate (MDI) as polyisocyanate and 2-hydroxyethyl methacrylate as hydroxyalkyl (meth)acrylate

Excepting that 700g of methylenediphenyl diisocyanate (MDI) was used instead of isophorone diisocyanate (IPDI) as polyisocyanate, 140g of polydimethylsiloxane diol (number average molecular weight: 1,000 g/mol, Aldrich Co., Ltd.) and 560g of the isosorbide-propylene oxide 5 mole adduct prepared in Preparation Example A3 were used instead of polypropyleneglycol (number average molecular weight: 1,000 g/mol, Kumho Petrochemical Co., Ltd.) and the isosorbide-ethylene oxide 5 mole adduct prepared in Preparation Example A1 as polyol component and the amount of 2-hydroxyethyl methacrylate was changed from 350g to 364g, the same method as Example A1 was conducted to obtain 1,763g of a (meth)acryl-modified polyurethane composition comprising 1,410g of (meth)acryl-modified polyurethane of the following formula C-1 and 353g of (meth)acryl-modified polyurethane of the following formula C-2.

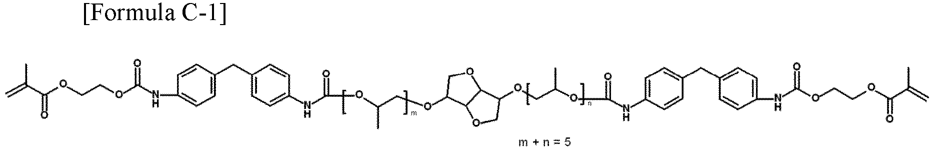

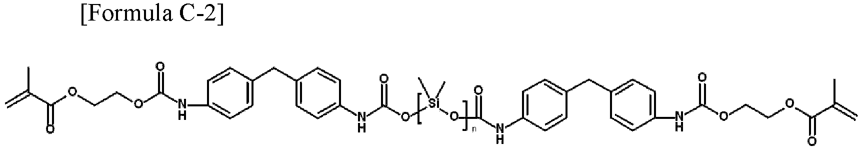

### Example A4: Preparation of (meth)acryl-modified polyurethane composition by using polytetrahydrofuran (30 parts by weight based on 100 parts by weight of total polyol) and isosorbide-propylene oxide 10 mole adduct (70 parts by weight based on 100 parts by weight of total polyol) as polyol, isophorone diisocyanate (IPDI) as polyisocyanate and 2-hydroxyethyl methacrylate as hydroxyalkyl (meth)acrylate

Excepting that 324g of polytetrahydrofuran (number average molecular weight: 1,000 g/mol, Aldrich Co., Ltd.) and 746g of the isosorbide-propylene oxide 10 mole adduct prepared in Preparation Example A4 were used instead of polypropyleneglycol (number average molecular weight: 1,000 g/mol, Kumho Petrochemical Co., Ltd.) and the isosorbide-ethylene oxide 5 mole adduct prepared in Preparation Example A1 as polyol component, the same method as Example A1 was conducted to obtain 2,020g of a (meth)acryl-modified polyurethane composition comprising 1,414g of (meth)acryl-modified polyurethane of the following formula D-1 and 606g of (meth)acryl-modified polyurethane of the following formula D-2.

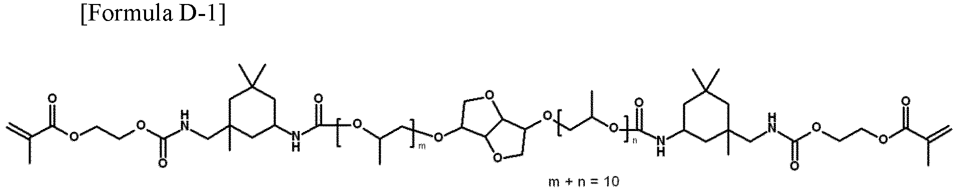

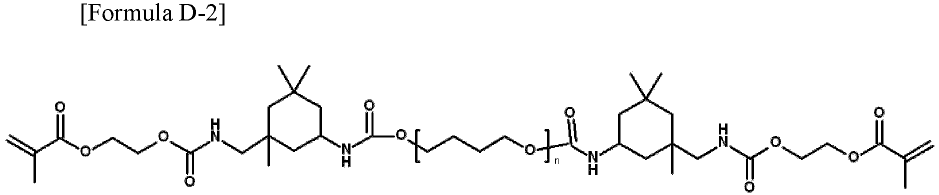

### Example A5: Preparation of (meth)acryl-modified polyurethane composition by preparing each of hydrophilic (meth)acryl-modified polyurethane and lipophilic (meth)acryl-modified polyurethane and then mixing them

Excepting that 981g of the isosorbide-ethylene oxide 5 mole adduct prepared in Preparation Example A1 was used only as polyol component without using polypropyleneglycol (number average molecular weight: 1,000 g/mol, Kumho Petrochemical Co., Ltd.), the same method as Example A1 was conducted to obtain 1,930g of (meth)acryl-modified polyurethane of the following formula A-1.

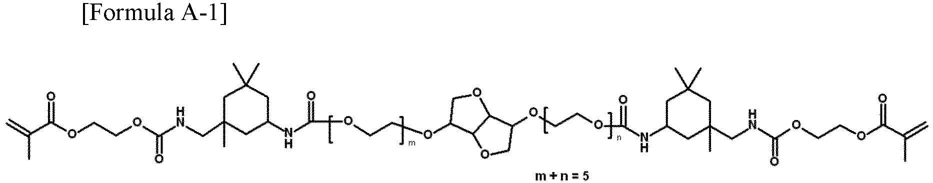

Also, excepting that 1,349g of polypropyleneglycol (number average molecular weight: 1,000 g/mol, Kumho Petrochemical Co., Ltd.) was used only as polyol component without using the isosorbide-ethylene oxide 5 mole adduct prepared in Preparation Example A1, the same method as Example A1 was conducted to obtain 2,250g of (meth)acryl-modified polyurethane of the following formula A-2.

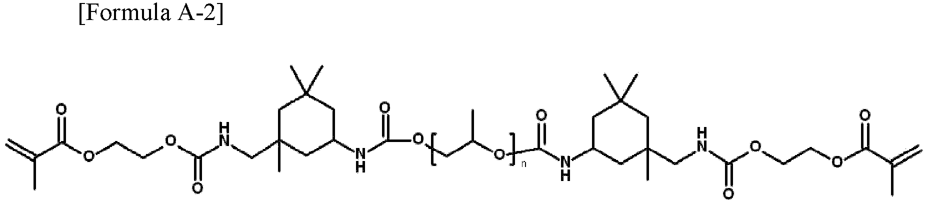

200g of the above-obtained (meth)acryl-modified polyurethane of formula A-1 and 800g of the above-obtained (meth)acryl-modified polyurethane of formula A-2 were simply mixed to obtain 1,000g of a (meth)acryl-modified polyurethane composition.

### Example A6: Preparation of (meth)acryl-modified polyurethane composition by preparing each of hydrophilic (meth)acryl-modified polyurethane and lipophilic (meth)acryl-modified polyurethane and then mixing them

Excepting that the amount of the above-obtained (meth)acryl-modified polyurethane of formula A-1 was changed from 200g to 500g and the amount of the above-obtained (meth)acryl-modified polyurethane of formula A-2 was changed from 800g to 500g, the same method as Example A5 was conducted by simply mixing the (meth)acryl-modified polyurethane of formula A-1 and the (meth)acryl-modified polyurethane of formula A-2 to obtain 1,000g of a (meth)acryl-modified polyurethane composition.

### Example A7: Preparation of (meth)acryl-modified polyurethane composition by preparing each of hydrophilic (meth)acryl-modified polyurethane and lipophilic (meth)acryl-modified polyurethane and then mixing them

Excepting that the amount of the above-obtained (meth)acryl-modified polyurethane of formula A-1 was changed from 200g to 800g and the amount of the above-obtained (meth)acryl-modified polyurethane of formula A-2 was changed from 800g to 200g, the same method as Example A5 was conducted by simply mixing the (meth)acryl-modified polyurethane of formula A-1 and the (meth)acryl-modified polyurethane of formula A-2 to obtain 1,000g of a (meth)acryl-modified polyurethane composition.

### Comparative Example A1: Preparation of (meth)acryl-modified polyurethane by using isosorbide-ethylene oxide 5 mole adduct as polyol, isophorone diisocyanate (IPDI) as polyisocyanate and 2-hydroxyethyl methacrylate as hydroxyalkyl (meth)acrylate

Excepting that 981g of the isosorbide-ethylene oxide 5 mole adduct prepared in Preparation Example A1 was used only as polyol component without using polypropyleneglycol (number average molecular weight: 1,000 g/mol, Kumho Petrochemical Co., Ltd.), the same method as Example A1 was conducted to obtain 1,930g of (meth)acryl-modified polyurethane of the following formula A-1.

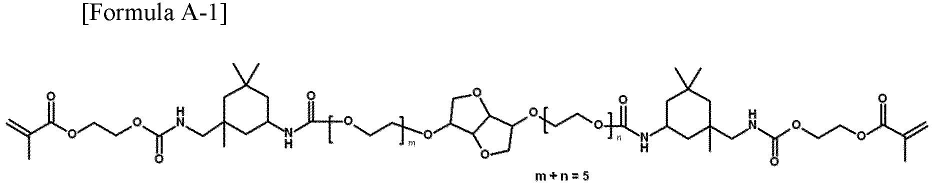

### Comparative Example A2: Preparation of (meth)acryl-modified polyurethane by using polypropyleneglycol as polyol, isophorone diisocyanate (IPDI) as polyisocyanate and 2-hydroxyethyl methacrylate as hydroxyalkyl (meth)acrylate

Excepting that 1,349g of polypropyleneglycol (number average molecular weight: 1,000 g/mol, Kumho Petrochemical Co., Ltd.) was used only as polyol component without using the isosorbide-ethylene oxide 5 mole adduct prepared in Preparation Example A1, the same method as Example A1 was conducted to obtain 2,250g of (meth)acryl-modified polyurethane of the following formula A-2.

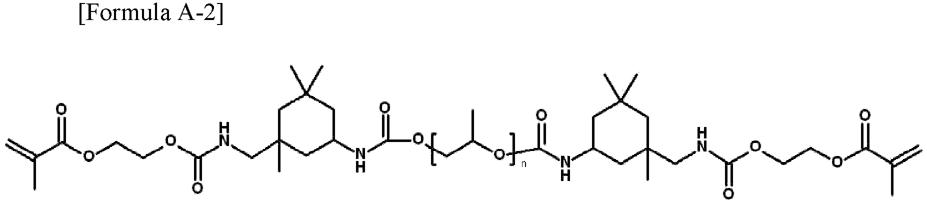

### <Preparation of composition for bonding heterogeneous materials> Examples B1 to B7 and Comparative Examples B1 to B2: Standard preparation method

In a mixing reactor controlled at 60°C or lower, the (meth)acryl-modified polyurethane composition; (meth)acrylic monomer; epoxy resin; epoxy curing promotor; thermal polymerization initiator; and polymerization inhibitor were fed with the weight ratio shown in the following Table 1, and were mixed by agitation at a temperature of 60°C or lower to prepare a liquid composition for bonding heterogeneous materials.

At that time, the sum of the amounts of the (meth)acryl-modified polyurethane composition; (meth)acrylic monomer; epoxy resin; epoxy curing promotor; thermal polymerization initiator; and polymerization inhibitor was 100 parts by weight in total.

### <Explanation of the components>

### (1) (Meth)acryl-modified polyurethane component ((meth)acryl-modified PU component)

- Example A1: (meth)acryl-modified polyurethane composition obtained in Example A1
- Example A2: (meth)acryl-modified polyurethane composition obtained in Example A2
- Example A3: (meth)acryl-modified polyurethane composition obtained in Example A3
- Example A4: (meth)acryl-modified polyurethane composition obtained in Example A4
- Example A5: (meth)acryl-modified polyurethane composition obtained in Example A5
- Example A6: (meth)acryl-modified polyurethane composition obtained in Example A6
- Example A7: (meth)acryl-modified polyurethane composition obtained in Example A7
- Comparative Example A1: (meth)acryl-modified polyurethane of formula A-1 obtained in Comparative Example A1
- Comparative Example A2: (meth)acryl-modified polyurethane of formula A-2 obtained in Comparative Example A2

### (2) (Meth)acrylic monomer

- 2HEMA: 2-hydroxyethyl methacrylate (Samchun Pure Chemical Co., Ltd.)
- 4-HBA: 4-hydroxybutyl acrylate (Samchun Pure Chemical Co., Ltd.)
- BA: butyl acrylate (Samchun Pure Chemical Co., Ltd.)
- PETTA: pentaerythritol tetraacrylate (Miwon Commercial Co., Ltd.)
- P-2M: 2-methacryloyloxyethyl acid phosphate (Kyoei Chemical Co., Ltd.)
- BDDA: 1,4-butanediol diacrylate (Aldrich Co., Ltd.)

### (3) Epoxy resin

- DGEBA: bisphenol A-based epoxy resin (Kukdo Chemical Co., Ltd.)
- YDF-170: bisphenol F-based epoxy resin (Kukdo Chemical Co., Ltd.)
- 1,4-BDGE: 1,4-butanediol diglycidyl ether (Kukdo Chemical Co., Ltd.)

### (4) Epoxy curing promotor

- DICY: Dicyandiamide (Evonik Co., Ltd.)
- UR2T: 1,1'-(4 methy-m-phenylene)bis(3,3 dimethylurea) (Evonik Co., Ltd.)

### (5) Thermal polymerization initiator

- V-65: 2,2'-azobis(2,4-dimethylvaleronitrile) (Fuji Film Co., Ltd.)
- V-40: 1,1'-azobis(cyclohexane-1-carbonitrile) (Fuji Film Co., Ltd.)
- Peroyl TCP: bis(4-t-butylcyclohexyl)peroxydicarbonate (Nichiyu Co., Ltd.)

### (6) Polymerization inhibitor

- MEHQ: hydroquinone monomethyl ether (Aldrich Co., Ltd.)

**[Table 1]**

| Components | Example | | | | | | |
|---|---|---|---|---|---|---|---|
| | B1 | B2 | B3 | B4 | B5 | B6 | B7 |
| (Meth)acryl-modified PU component (pbw) | Ex. A1 (60) | Ex. A2 (30) | Ex. A3 (80) | Ex. A4 (58) | Ex. A5 (48.4) | Ex. A6 (33.8) | Ex. A7 (53) |
| (Meth)acrylic monomer (pbw) | 2HEMA(25) | 2HEMA(30) | 4-HBA(12) | 2HEMA(8) | 2HEMA(25) | 2HEMA(30) | 2HEMA(28) |
| | PETTA(2) | BA(15) | PETTA(2) | P-2M(2) | PETTA(10) | BA(15) | P-2M(2) |
| | | P-2M(5) | | | | P-2M(5) | |
| Epoxy resin (pbw) | DGEBA (11) | YDF-170 (19) | 1,4-BDGE (5) | DGEBA (29) | DGEBA (15) | YDF-170 (15) | DGEBA (15) |
| Epoxy curing promotor (pbw) | DICY (1) | UR2T (0.5) | DICY (0.95) | DICY (0.5) | DICY (1) | UR2T (0.5) | DICY (0.5) |
| Thermal polymerization initiator (pbw) | V-65 (0.9) | V-40 (0.3) | Peroyl TCP (0.04) | V-65 (2) | V-65 (0.5) | V-40 (0.5) | V-65 (1) |
| Polymerization inhibitor (pbw) | MEHQ (0.1) | MEHQ (0.2) | MEHQ (0.01) | MEHQ (0.5) | MEHQ (0.1) | MEHQ (0.2) | MEHQ (0.5) |

| | | | | | | | |
|---|---|---|---|---|---|---|---|
| (pbw: parts by weight; Ex.: Example) | | | | | | | |

**[Table 1] (continued)**

| Components | Comparative Example | |
|---|---|---|
| | B1 | B2 |
| (Meth)acryl-modified PU component (pbw) | C-Ex. A1 (50) | C-Ex. A2 (60) |
| (Meth)acrylic monomer (pbw) | BA(30) | 4-HBA(22) |
| | P-2M(5) | PETTA(2) |
| Epoxy resin (pbw) | DGEBA (14) | 1,4-BDGE (15) |
| Epoxy curing promotor (pbw) | DICY (0.5) | DICY (0.6) |
| Thermal polymerization initiator (pbw) | V-40 (0.45) | V-40 (0.35) |
| Polymerization inhibitor (pbw) | MEHQ (0.05) | |

| | | |
|---|---|---|
| (pbw: parts by weight; C-Ex.: Comparative Example) | | |

### <Evaluation of properties of the composition for bonding heterogeneous materials>

The composition for bonding heterogeneous materials prepared in each of Examples B1 to B7 and Comparative Examples B1 to B2 was applied with an area of 2.5cm x 1.25cm on a surface of rolled steel sheet cut into 2.5cm x 12cm size and a surface of carbon fiber reinforced plastic (CFRP) cut into 2.5cm x 12cm size, and the thickness was adjusted by using 0.2mm glass bead, and then the applied parts were overlapped and fixed, and cured by heat at 100°C for 2 minutes to prepare an adhesion sample of heterogeneous materials. For each of the samples, the adhesion, oil resistance and storage stability were evaluated according to the following methods, and the results are shown in the following Table 2.

### <Property evaluation of composition for bonding heterogeneous materials>

### (1) Adhesion

In order to evaluate the adhesion of the composition to heterogeneous materials, the lap shear strength (MPa) of each adhesion sample of heterogeneous materials was measured by using UTM (Instron 5967, Instron Co., Ltd.) at room temperature (23°C), and after heating each adhesion sample of heterogeneous materials to 100°C with hot air dryer. Concretely, for each adhesion sample of heterogeneous materials, the shear strength was measured 5 times in total, and the average value thereof was calculated. Higher shear strength means better adhesion.

### (2) Oil resistance

The adhesion samples of heterogeneous materials were immersed in mineral oil (Daejung Chemical Co., Ltd.) and heated at 90°C for 50 hours, and then for each adhesion sample of heterogeneous materials, the shear strength was measured 5 times according to the adhesion measurement method explained in the above (1), and the average value thereof was calculated. Thereafter, for each adhesion sample of heterogeneous materials, the reduction ratio (%) of shear strength after immersion to shear strength before immersion was calculated. Lower reduction ratio of shear strength means better oil resistance. Shear strength reduction ratio (%) = (Shear strength before immersion - Shear strength after immersion) x 100 / Shear strength before immersion

### (3) Storage stability

Each composition for bonding heterogeneous materials prepared in Examples B 1 to B7 and Comparative Examples B 1 to B2 was put into a transparent glass vial and sealed, kept at room temperature (23°C) for 3 days, and then whether the curing occurred was checked with naked eye.

**[Table 2]**

| | | Adhesion | | Oil resistance | Storage stability |
|---|---|---|---|---|---|
| | | Shear strength at room temperature (23°C) (MPa) | Shear strength at high temperature (100°C) (MPa) | Shear strength reduction ratio at room temperature (23°C) (%) | Occurrence of curing after being kept at room temperature for 3 days |
| Example | B1 | 27.3 | 18.9 | 16 | Not cured |
| | B2 | 23.5 | 20.7 | 14 | |
| | B3 | 26.6 | 17.1 | 10 | |
| | B4 | 25.8 | 18.7 | 18 | |
| | B5 | 26.0 | 18.3 | 19 | |
| | B6 | 25.6 | 19.1 | 15 | |
| | B7 | 26.1 | 20.2 | 12 | |
| Comparative Example | B1 | 14 | 11.9 | 5 | Not cured |
| | B2 | 22.8 | 16.9 | Spontaneously peeled off | |

As shown in Table 2 above, in case of the compositions for bonding heterogeneous materials of Examples B 1 to B7 prepared by using the (meth)acryl-modified polyurethane composition according to the present invention, the adhesion between heterogeneous materials was excellent so as to show a shear strength at room temperature (23°C) of higher than 23 MPa and the adhesion was maintained well so as to show a shear strength at high temperature (100°C) of higher than 17 MPa, and also the adhesion was maintained well so as to show a shear strength reduction ratio of less than 20% even after immersion in mineral oil at 90°C for 50 hours, and thus the oil resistance was also excellent.

However, in case of the composition for bonding heterogeneous materials of Comparative Example B 1 for which a (meth)acryl-modified polyurethane composition prepared without using lipophilic polyol was applied, the adhesion with carbon fiber reinforced plastic (CFRP) was lowered and thus the shear strength was low at both room temperature and high temperature. Also, in case of the composition for bonding heterogeneous materials of Comparative Example B2 for which a (meth)acryl-modified polyurethane composition prepared without using anhydrosugar alcohol-alkylene oxide adduct was applied, the adhesion with metal (rolled steel sheet) was lowered and thus the shear strength was low at both room temperature and high temperature, and the oil resistance was poor so that spontaneous peeling off of the adhesion sample of heterogeneous materials was observed after finishing the heating of the adhesion sample of heterogeneous materials in the state of immersion in oil.

As explained above, in case of a composition for adhesion comprising the (meth)acryl-modified polyurethane composition according to the present invention, the adhesion between heterogeneous materials at room temperature is excellent and the adhesion is maintained well even by heating it to high temperature or keeping it in mineral oil at high temperature, and thus the adhesion at high temperature and the oil resistance are excellent.

### <Preparation of hygroscopic coating composition>

### Examples C1 to C7 and Comparative Examples C1 to C2: Standard preparation method

In a mixing reactor controlled at 60°C or lower, the (meth)acryl-modified polyurethane composition; (meth)acrylic monomer; thermal polymerization initiator; and polymerization inhibitor were fed with the weight ratio shown in the following Table 3, and were mixed by agitation at a temperature of 60°C or lower to prepare a liquid hygroscopic coating composition.

At that time, the sum of the amounts of the (meth)acryl-modified polyurethane composition; (meth)acrylic monomer; thermal polymerization initiator; and polymerization inhibitor was 100 parts by weight in total.

### <Explanation of the components>

### (1) (Meth)acryl-modified polyurethane component ((meth)acryl-modified PU component)

- Example A1: (meth)acryl-modified polyurethane composition obtained in Example A1
- Example A2: (meth)acryl-modified polyurethane composition obtained in Example A2
- Example A3: (meth)acryl-modified polyurethane composition obtained in Example A3
- Example A4: (meth)acryl-modified polyurethane composition obtained in Example A4
- Example A5: (meth)acryl-modified polyurethane composition obtained in Example A5
- Example A6: (meth)acryl-modified polyurethane composition obtained in Example A6
- Example A7: (meth)acryl-modified polyurethane composition obtained in Example A7
- Comparative Example A1: (meth)acryl-modified polyurethane of formula A-1 obtained in Comparative Example A1
- Comparative Example A2: (meth)acryl-modified polyurethane of formula A-2 obtained in Comparative Example A2

### (2) (Meth)acrylic monomer

- 2HEMA: 2-hydroxyethyl methacrylate (Samchun Pure Chemical Co., Ltd.)
- 4-HBA: 4-hydroxybutyl acrylate (Samchun Pure Chemical Co., Ltd.)
- BA: butyl acrylate (Samchun Pure Chemical Co., Ltd.)
- PETTA: pentaerythritol tetraacrylate (Miwon Commercial Co., Ltd.)
- P-2M: 2-methacryloyloxyethyl acid phosphate (Kyoei Chemical Co., Ltd.)

### (3) Thermal polymerization initiator

- V-40: 1,1'-azobis(cyclohexane-1-carbonitrile) (Fuji Film Co., Ltd.)
- Peroyl TCP: bis(4-t-butylcyclohexyl)peroxydicarbonate (Nichiyu Co., Ltd.)

### (4) Polymerization inhibitor

- MEHQ: hydroquinone monomethyl ether (Aldrich Co., Ltd.)

**[Table 3]**

| Components | Example | | | | | | |
|---|---|---|---|---|---|---|---|
| | C1 | C2 | C3 | C4 | C5 | C6 | C7 |
| (Meth)acryl-modified PU component (pbw) | Ex. A1 (85) | Ex. A2 (65) | Ex. A3 (90) | Ex. A4 (60) | Ex. A5 (50) | Ex. A6 (40) | Ex. A7 (63) |
| (Meth)acrylic monomer (pbw) | 2HEMA(14) | 2HEMA(30) | 4-HBA(7) | 2HEMA(27) | 2HEMA(35) | 2HEMA(30) | 2HEMA(30) |
| | | P-2M(4.4) | PETTA(2.8) | P-2M(12.3) | PETTA(14.4) | BA(25) | P-2M(5.5) |
| | | | | | | P-2M(4.3) | |
| Thermal polymerization initiator (pbw) | V-40 (0.95) | V-40 (0.4) | Peroyl TCP (0.19) | Peroyl TCP (0.2) | Peroyl TCP (0.5) | V-40 (0.5) | V-40 (1) |
| Polymerization inhibitor (pbw) | MEHQ (0.05) | MEHQ (0.2) | MEHQ (0.01) | MEHQ (0.5) | MEHQ (0.1) | MEHQ (0.2) | MEHQ (0.5) |

| | | | | | | | |
|---|---|---|---|---|---|---|---|
| (pbw: parts by weight; Ex.: Example) | | | | | | | |

**[Table 3] (continued)**

| Components | Comparative Example | |
|---|---|---|
| | C1 | C2 |
| (Meth)acryl-modified PU component (pbw) | C-Ex. A1 (60) | C-Ex. A2 (80) |
| (Meth)acrylic monomer (pbw) | BA(30) | 4-HBA(12) |
| | P-2M(9.5) | PETTA(7.6) |
| Thermal polymerization initiator (pbw) | V-40 (0.45) | V-40 (0.35) |
| Polymerization inhibitor (pbw) | MEHQ (0.05) | |

| | | |
|---|---|---|
| (pbw: parts by weight; C-Ex.: Comparative Example) | | |

### < Property evaluation of hygroscopic coating composition>

### (1) Hygroscopicity

In order to evaluate hygroscopicity of the hygroscopic coating composition, the hygroscopic coating composition prepared in each of Examples C1 to C7 and Comparative Examples C1 to C2 was filled in a frame made of Teflon having a size of 5cm x 5cm x 2cm (width x length x height), and then cured through heat treatment at 100°C for 20 minutes to prepare test sample for hygroscopicity evaluation.

The test sample for hygroscopicity evaluation was weighed and then immersed in water at room temperature (15 to 25°C) for 10 hours to proceed moisture absorption. Then, the test sample for hygroscopicity evaluation was taken out of water and the entire surface of the test sample for hygroscopicity evaluation was wiped with dried microfiber cloth, and then weighed to calculated moisture absorption rate according to the following equation.

Moisture absorption rate (%) = [(Weight of the sample after immersion - Weight of the sample before immersion) / Weight of the sample before immersion] x 100

### (2) Adhesion to glass

According to a bar coating method using No. 10 bar with a coating speed of about 35 mm/s, the hygroscopic coating composition prepared in each of Examples C1 to C7 and Comparative Examples C1 to C2 was coated on a transparent glass and treated by heat at 100°C for 20 minutes to prepare a hygroscopic coating sample.

In order to evaluate adhesion of the hygroscopic coating sample, the sample was immersed in water at room temperature (15 to 25°C) for 10 hours for moisture absorption, and then scratched by crossing lines on the coating film of the sample with a cross hatch cutter, to make 100 pieces of grid having a size of 10 mm x 10 mm (width x length). Then, a tape was attached to the grid pieces, rubbed with uniform force and detached, and the number of grid pieces peeled off from the coating film of the sample and attached to the peeled tape was counted. According to the number of grid pieces peeled off from the coating film of the sample, the degree of adhesion was graded from 0B to 5B as follows. The smaller number of grid pieces peeled off from the coating film of the sample means the better adhesion of the coating film to glass (Grade of 3B or higher is required).

### [Cross cut classification criteria (ASTM D 3359)]

| Grade | Criteria |
|---|---|
| 5B | No grid piece peeled off from the coating film |
| 4B | 1 to 5 grid pieces peeled off from the coating film |
| 3B | 6 to 15 grid pieces peeled off from the coating film |
| 2B | 16 to 35 grid pieces peeled off from the coating film |
| 1B | 36 to 65 grid pieces peeled off from the coating film |
| 0B | 66 or more grid pieces peeled off from the coating film |

### (3) Anti-fogging property

According to a bar coating method using No. 10 bar with a coating speed of about 35 mm/s, the hygroscopic coating composition prepared in each of Examples C1 to C7 and Comparative Examples C1 to C2 was coated on a transparent glass and treated by heat at 100°C for 20 minutes to prepare a hygroscopic coating sample.

In order to evaluate anti-fogging property of the hygroscopic coating sample, the coating surface of the hygroscopic coating sample was placed at the outlet of a beaker filled with water at 50°C to observe fogging phenomenon. During the exposure for 1 minute in the anti-fogging test, no fogging was evaluated as "Pass" whereas at least slight fogging was evaluated as "Fail."

**[Table 4]**

| | | Moisture absorption rate (%) | Adhesion | Anti-fogging property |
|---|---|---|---|---|
| Example | C1 | 12.3 | 5B | Pass |
| | C2 | 21.6 | 4B | Pass |
| | C3 | 36.8 | 3B | Pass |
| | C4 | 27.9 | 3B | Pass |
| | C5 | 14.5 | 4B | Pass |
| | C6 | 25.1 | 3B | Pass |
| | C7 | 37.1 | 3B | Pass |
| Comparative Example | C1 | 49.7 | 1B | Pass |
| | C2 | 7.6 | 2B | Fail |

As shown in Table 4 above, in case of the hygroscopic coating compositions of Examples C1 to C7 prepared by using the (meth)acryl-modified polyurethane composition according to the present invention, the hygroscopicity was excellent so as to show a moisture absorption rate of from 10% to 40% after immersion in water at room temperature (15 to 25°C) for 10 hours, and the adhesion to glass was excellent so as to show adhesion force of 3B or higher grade even after moisture absorption, and also the anti-fogging property was realized excellently.

However, in case of the hygroscopic coating composition of Comparative Example C 1 for which a (meth)acryl-modified polyurethane composition prepared without using lipophilic polyol was applied, excessive expansion occurred due to the moisture absorption rate of higher than 40%, and thereby the adhesion to glass was very poor so as to show adhesion force of 1B grade.

In case of the hygroscopic coating composition of Comparative Example C2 for which a (meth)acryl-modified polyurethane composition prepared without using anhydrosugar alcohol-alkylene oxide adduct was applied, the moisture absorption rate was too low and the adhesion to glass was poor so as to show adhesion force of 2B grade, and the anti-fogging property was also poor.

As explained above, in case of a hygroscopic coating composition comprising the (meth)acryl-modified polyurethane composition according to the present invention, it can be known that the adhesion to glass is excellent even after moisture absorption and the anti-fogging property is also excellent.

## Claims

1. A (meth)acryl-modified polyurethane composition comprising:
(1) hydrophilic (meth)acryl-modified polyurethane comprising polymerized units derived from anhydrosugar alcohol-alkylene oxide adduct; polymerized units derived from polyisocyanate; and polymerized units derived from hydroxyalkyl (meth)acrylate; and
(2) lipophilic (meth)acryl-modified polyurethane comprising polymerized units derived from lipophilic polyol; polymerized units derived from polyisocyanate; and polymerized units derived from hydroxyalkyl (meth)acrylate.

2. The (meth)acryl-modified polyurethane composition of claim 1, which comprises, based on total 100 parts by weight of the (meth)acryl-modified polyurethane composition, 16 to 84 parts by weight of the hydrophilic (meth)acryl-modified polyurethane and 16 to 84 parts by weight of the lipophilic (meth)acryl-modified polyurethane.

3. The (meth)acryl-modified polyurethane composition of claim 1, wherein the anhydrosugar alcohol-alkylene oxide adduct is an adduct obtained by reacting hydroxyl group(s) at both ends or one end of anhydrosugar alcohol with alkylene oxide, and wherein the alkylene oxide is a linear alkylene oxide having 2 to 8 carbons or a branched alkylene oxide having 3 to 8 carbons.

4. The (meth)acryl-modified polyurethane composition of claim 3, wherein the anhydrosugar alcohol is isosorbide, isomannide, isoidide or a combination thereof.

5. The (meth)acryl-modified polyurethane composition of claim 1, wherein the polyisocyanate is methylenediphenyl diisocyanate (MDI), toluene diisocyanate (TDI), hexamethylene diisocyanate (HDI), isophorone diisocyanate (IPDI), or a combination thereof.

6. The (meth)acryl-modified polyurethane composition of claim 1, wherein the hydroxyalkyl (meth)acrylate is hydroxy-C₁₋₈alkyl (meth)acrylate.

7. The (meth)acryl-modified polyurethane composition of claim 1, wherein the hydrophilic (meth)acryl-modified polyurethane is represented by the following formula 2: 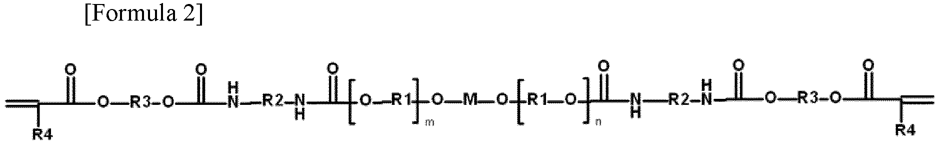 in the above formula 2,
each of R1 is independently an alkylene group,
each of R2 is independently an alkylene group, a cycloalkylene group, or an arylene group,
each of R3 is independently an alkylene group,
each of R4 is independently a hydrogen atom or an alkyl group,
M is a divalent organic group derived from anhydrosugar alcohol,
each of m and n independently represents an integer of 0 to 15, and
m+n represents an integer of 1 to 30.

8. The (meth)acryl-modified polyurethane composition of claim 7, wherein:
in formula 2,
each of R1 is independently a C2-C8 linear or C3-C8 branched alkylene group,
each of R2 is independently a C2-C20 linear or C3-C20 branched alkylene group, a C3-C20 cycloalkylene group, or a C6-C20 arylene group,
each of R3 is independently a C1-C8 linear or C3-C8 branched alkylene group,
each of R4 is independently a hydrogen atom or a C1-C4 linear or C3-C4 branched alkyl group,
M is a divalent organic group derived from isosorbide, isomannide or isoidide,
each of m and n independently represents an integer of 0 to 15,
m+n represents an integer of 1 to 25.

9. The (meth)acryl-modified polyurethane composition of claim 1, wherein the lipophilic polyol is selected from polytetrahydrofuran, polypropyleneglycol, polydimethylsiloxane (PDMS) polyol, or combination thereof.

10. The (meth)acryl-modified polyurethane composition of claim 1, wherein the lipophilic (meth)acryl-modified polyurethane is represented by the following formula 3: 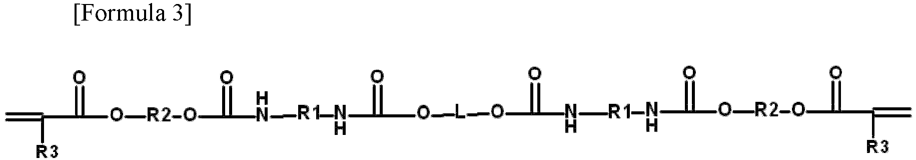 in the above formula 3,
each of R1 is independently an alkylene group, a cycloalkylene group, or an arylene group,
each of R2 is independently an alkylene group,
each of R3 is independently a hydrogen atom or an alkyl group,
L is a divalent organic group derived from lipophilic polyol,
wherein the number average molecular weight of the lipophilic polyol is 200 to 3,000 g/mol.

11. The (meth)acryl-modified polyurethane composition of claim 10, wherein:
in formula 3,
each of R1 is independently a C2-C20 linear or C3-C20 branched alkylene group, a C3-C20 cycloalkylene group, or a C6-C20 arylene group,
each of R2 is independently a C1-C8 linear or C3-C8 branched alkylene group,
each of R3 is independently a hydrogen atom or a C1-C4 linear or C3-C4 branched alkyl group,
L is a divalent organic group derived from lipophilic polyol selected from polytetrahydrofuran, polypropyleneglycol, polydimethylsiloxane (PDMS) polyol, or combination thereof,
wherein the number average molecular weight of the lipophilic polyol is 500 to 2,500 g/mol.

12. A method for preparing a (meth)acryl-modified polyurethane composition, comprising the steps of:
(1) reacting a polyol component comprising anhydrosugar alcohol-alkylene oxide adduct and lipophilic polyol with polyisocyanate to prepare intermediate having terminal isocyanate group; and
(2) reacting the intermediate obtained in said step (1) with hydroxyalkyl (meth)acrylate.

13. The method for preparing a (meth)acryl-modified polyurethane composition of claim 12, wherein the polyol component comprises, based on total 100 parts by weight of the polyol component, 16 to 84 parts by weight of anhydrosugar alcohol-alkylene oxide adduct and 16 to 84 parts by weight of lipophilic polyol.

14. A method for preparing a (meth)acryl-modified polyurethane composition, comprising the step of mixing (i) hydrophilic (meth)acryl-modified polyurethane comprising polymerized units derived from anhydrosugar alcohol-alkylene oxide adduct; polymerized units derived from polyisocyanate; and polymerized units derived from hydroxyalkyl (meth)acrylate, and (ii) lipophilic (meth)acryl-modified polyurethane comprising polymerized units derived from lipophilic polyol; polymerized units derived from polyisocyanate; and polymerized units derived from hydroxyalkyl (meth)acrylate.

15. The method for preparing a (meth)acryl-modified polyurethane composition of claim 14, wherein:
the (i) hydrophilic (meth)acryl-modified polyurethane is prepared by a method comprising the steps of: (a) reacting anhydrosugar alcohol-alkylene oxide adduct and polyisocyanate to prepare intermediate having terminal isocyanate group; and (b) reacting the intermediate obtained in said step (a) and hydroxyalkyl (meth)acrylate, and
the (ii) lipophilic (meth)acryl-modified polyurethane is prepared by a method comprising the steps of: (c) reacting lipophilic polyol and polyisocyanate to prepare intermediate having terminal isocyanate group; and (d) reacting the intermediate obtained in said step (c) and hydroxyalkyl (meth)acrylate.

16. The method for preparing a (meth)acryl-modified polyurethane composition of claim 14, wherein, based on total 100 parts by weight of the prepared (meth)acryl-modified polyurethane composition, 16 to 84 parts by weight of the hydrophilic (meth)acryl-modified polyurethane and 16 to 84 parts by weight of the lipophilic (meth)acryl-modified polyurethane are mixed.

17. A composition for adhesion comprising the (meth)acryl-modified polyurethane composition of any one of claims 1 to 11.

18. An article to which the composition for adhesion of claim 17 is applied.

19. A hygroscopic coating composition comprising the (meth)acryl-modified polyurethane composition of any one of claims 1 to 11.

20. The hygroscopic coating composition of claim 19, which is used for anti-fogging use.
